# EUROPÄISCHE PATENTANMELDUNG

(11) **EP 1 422 100 A1**
(43) Veröffentlichungstag der Anmeldung: **26.05.2004**
(21) Anmeldenummer: 03020217.0
(22) Anmeldetag: 06.09.2003
(51) Int. Cl.: B60J 7/19, B60J 7/10

(54) **Abnehmbares Dach für ein Kraftfahrzeug**

(30) Priorität: 20.11.2002 DE 10254108
(71) Anmelder: Dr.Ing. h.c.F. Porsche Aktiengesellschaft, 70435 Stuttgart (DE)
(72) Erfinder: Homann, Bodo, 71296 Heimsheim (DE); Scholz, Andre, 75446 Wiernsheim (DE)

(57) **Zusammenfassung**

Dieses abnehmbare Dach (9) ist für ein Kraftfahrzeug, insbesondere einen Personenkraftwagen (1) bestimmt, das eine Öffnung (10) zwischen einem Windschutzscheibenrahmen (3) und einer bspw. hinter Fahrgastsitzen (4,5) sich erstreckenden Aufbaurahmenstruktur (6) eines Aufbaus des Personenkraftwagens (1) abdeckt und einerseits mittels einer formschlüssig wirkenden Fixierungssystems (11) und andererseits mittels eines Verriegelungssystems (12) in Lage gehalten ist, welches Verriegelungssystem (12) zwischen Dach (9) und der als Rollbügelvorrichtung (8) ausgebildeten Aufbaurahmenstruktur (6) wirksam ist.

Um das Dach (9) vorteilhaft mittels des Fixierungssystems (11) und des Verriegelungssystems (12) am Windschutzscheibenrahmen (3) bzw. an der Rollbügelvorrichtung (8) zu befestigen weist das Verriegelungssystem (12) wenigstens eine mit der Rollbügelvorrichtung (8) zusammenarbeitende Verriegelungsvorrichtung (15) auf, bestehend aus einer Betätigungsvorrichtung (16) mit einem Sperrzapfen (17), der in eine Schließkulisse (18) eingreift.

## Beschreibung

Die Erfindung bezieht sich auf ein abnehmbares Dach für ein Kraftfahrzeug, insbesondere einen Personenkraftwagen nach den Oberbegriff des Patentanspruchs 1.

Ein bekanntes Dach der eingangs genannten Gattung, DE 14 55 743, ist an einem Windschutzscheibenrahmen mittels eines formschlüssigen Fixierungssystems und an einer Rollbügelvorrichtung mittels eines Verriegelungssystems festgelegt. Das Verriegelungssystem weist einen am Dach gehaltenen Bolzen auf, den eine an einer Welle befestigte exzentrische Hülse, beide letztere sind an der Rollbügelvorrichtung gelagert, umgibt. Die Welle wird von einer Lagerkonsole aufgenommen und ist mit einem Handhebel verbunden, wobei die Lagerkonsole und der Handhebel von einer Innenwand der Rollbügelvorrichtung weggeführt sind.

Gemäß der DE 41 37 344 A1 verläuft zwischen einem oberen Trägerteil eines Windschutzscheibenrahmens und einer hinter Lehnen von Fahrzeugsitzen angeordneten Aufbaurahmenstruktur ein Rollbügel. Die Aufbaurahmenstruktur umfasst eine Rollbügelvorrichtung, die einen Fahrgastraum des Personenkraftwagens quer zur Fahrzeuglängsrichtung überspannt. Das Dach besteht aus einem formsteifen Werkstoff und ist als ein einziges Bauteil ausgeführt, wobei das Dach unter Zwischenschaltung eines Fixierungssystems und eines Verriegelungssystems am Trägerteil des Windschutzscheibenrahmens bzw. an der Aufbaustruktur in Lage gehalten wird.

Darüber hinaus befasst sich die DE 94 06 435 mit einem Dach, das zwei in einer Mittellängsebene zusammengesetzte Dachelemente aufweist, die am Windschutzscheibenrahmen allein über eine Verriegelungsvorrichtung gehalten wird. Die Verriegelungsvorrichtung ist mit einem Drehgriff versehen, der in einer Schließstellung mit einer Nase eine Spannrampe einer Innenverkleidung untergreift.

Aufgabe der Erfindung ist es ein abnehmbares Dach für einen Personenkraftwagen zu schaffen, das mittels eines Fixierungssystems und eines Verriegelungssystems funktionsgerecht an einem Windschutzscheibenrahmen und einer hinter Fahrzeugsitzen sich erstreckenden Aufbaurahmenstruktur sicher gehalten ist. Dabei sollte aber auch sicher gestellt sein, dass das Verriegelungssystem bei guter Funktion und leicht realisierbaren Bauteilen so eingebaut ist, dass die Insassen des Personenkraftwagens weitgehend geschützt sind.

Erfindungsgemäß wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass sich das Dach bzw. die Dachelemente dank des Fixierungssystems und des Verriegelungssystems auf einfache Weise mit dem Windschutzscheibenrahmen und der Rollbügelvorrichtung verbinden sowie von letzteren lösen lassen. Dabei stellt das durch wenigstens eine Verriegelungsvorrichtung gebildete Verriegelungssystem einen festen Verbund zwischen Dach und Dachelementen und der Rollbügelvorrichtung her und zeichnet sich durch eine gute Funktion aus. Sie wird auch noch durch die besondere konstruktive Ausprägung der Betätigungsvorrichtung und der Schließkulisse sowie der Fixierungsvorrichtung unterstützt, die zwischen der Betätigungsvorrichtung und der Schließkulisse wirksam ist. Die gestalterische Ausbildung der Betätigungsvorrichtung und der Schließkulisse ermöglichen es, dass die entsprechenden Bauteile leicht herstellbar sind und teleologisch zusammenarbeiten. Die Betätigungsvorrichtung ist in das Dach bzw. die Dachelemente eingebaut, wobei ihr Handhebel in der Schließstellung eine versenkte, also die Insassen weitgehend schützende Lage einnimmt. Schließlich: damit das Dach bzw. die Dachelemente unter der Wirkung der Verriegelungseinrichtung eine funktionsgerechte Verbindung mit der Rollbügelvorrichtung eingehen sind zwischen einer hinteren Dachwandverlängerung einer Rinne der Rollbügelvorrichtung ein erster und ein zweiter Dichtabschnitt eines Dichtkörpers vorgesehen.

In der Zeichnung wird ein Ausführungsbeispiel der Erfindung gezeigt, das nachstehend näher erläutert wird.

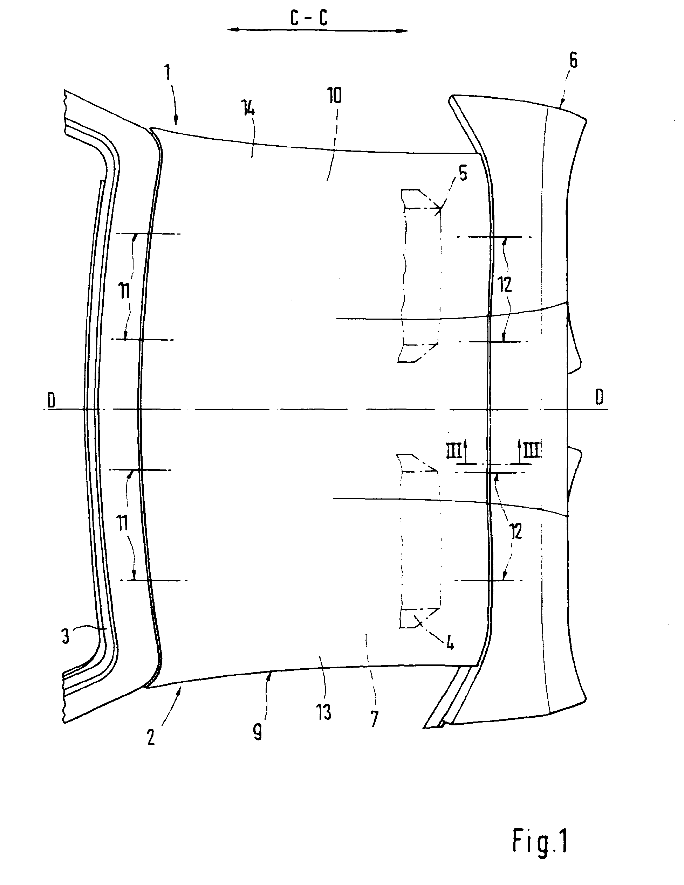

Es zeigen
- Fig. 1: eine Teilansicht eines Personenkraftwagen von oben mit einem abnehmbaren Dach,
- Fig. 2: eine Ansicht in Pfeilrichtung A der Fig.1,
- Fig. 3: einen Schnitt nach der Linie lll-lll der Fig. 1 in größerem Maßstab,
- Fig. 4: einen Schnitt nach der Linie IV-IV der Fig. 3 in größerem Maßstab,
- Fig. 5: eine Einzelheit X der Fig. 4,
- Fig. 6: eine Einzelheit Y der Fig.4,
- Fig. 7: eine Schrägansicht von hinten auf ein Dachelement gemäß Fig. I, jedoch um 180° gedreht.

Ein Personenkraftwagen 1 umfasst einen offene Aufbau 2 mit einem Windschutzscheibenrahmen 3 und einer sich hinter Fahrgastsitzen 4,5 erstreckenden hintere Aufbaurahmenstruktur 6, die eine einen Fahrgastraum 7 überspannende Rollbügelvorrichtung 8 umfasst. Der Bereich zwischen Windschutzscheibenrahmen 3 und Rollbügelvorrichtung 8 ist frei von in Fahrzeuglängsrichtung C-C verlaufenden den Aufbau 2 verstärkenden Trägerstrukturen. Dies bedeutet, dass sämtliche auf den Aufbau 2 einwirkende Biege- und Torsionsmomente von einer nicht gezeigten Bodenanlage mit ihren Trägern aufgenommen werden, so dass etwa im Fahrbetrieb des Personenkraftwagens auftretenden Relativbewegungen zwischen Windschutzscheibenrahmen 3 und Rollbügelvorrichtung 8 bei der Verbindung eines formsteifen abnehmbaren Dachs 9 mit den zuletzt genannten durch konstruktive Maßnahmen Rechnung getragen ist.

Das Dach 9 besteht aus festem oder formsteifem Kunststoff z.B. hochbelastbarer Gattung, insbesondere faserverstärktem Kunststoff - CFK -, deckt eine Öffnung 10 zwischen dem Windschutzscheibenrahmen 3 und Rollbügelvorrichtung 8 bzw. hinterer Aufbaurahmenstruktur 6 ab, und es ist mit dem Aufbau 2 unter Zwischenschaltung eines formschlüssig wirkenden Fixierungssystems 11 und eines Verriegelungssystems 12 verbunden. Darüber hinaus umfasst das Dach 9 zwei in einer Mittellängsebene D-D ohne Verbindungselemente, also scharnierlos zusammengesetzte Dachelemente 13,14. Jedes Dachelement z. B. 13 wirkt mit wenigstens einem Fixierungssystems 11 mit dem Windschutzscheibenrahmen 3 und einer wenigsten einem durch eine Verriegelungsvorrichtung 15 gebildeten Verriegelungssystems 12 mit der Rollbügelvorrichtung 8 zusammen. Eine beispielhafte Ausführungsform für ein Fixierungssystem zwischen Windschutzscheibenrahmen und Dach ist der eingangs genannten DE 14 55 743 zu entnehmen, bei der ein am Dach angebrachter Zapfen in eine Aufnahme des Windschutzscheibenrahmens eingreift.

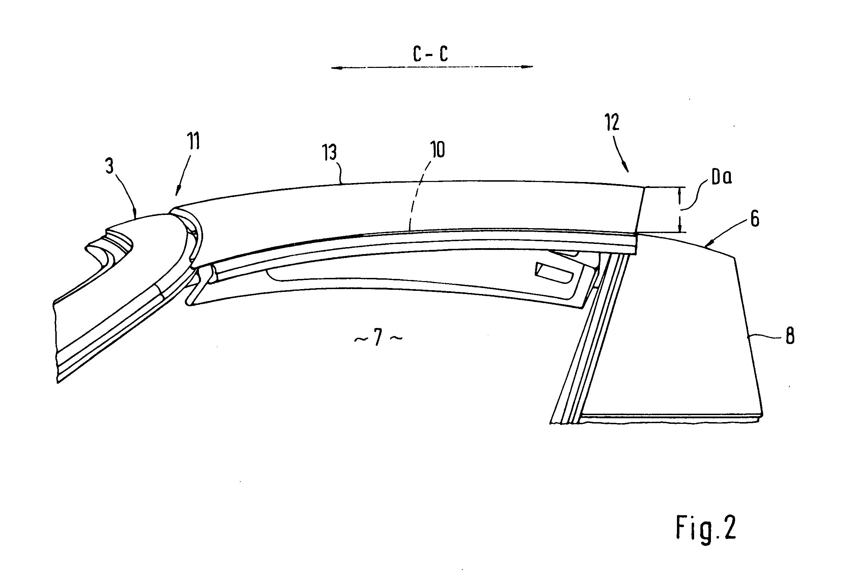

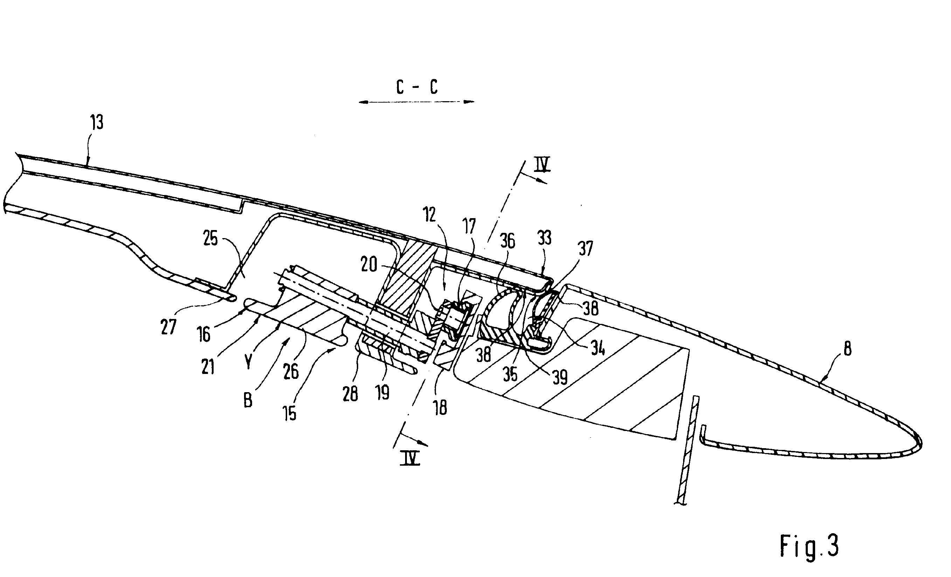

Das Dachelement 13 und das Dachelement 14 können in einem nicht dargestellten Stauraum des Personenkraftwagens 1 in gestapelter Form untergebracht werden; der Personenkraftwagen ist im offenen Zustand. Zur Montage des Dachelements 13 wird es durch eine in Fahrtrichtung E gerichtet Bewegung in Eingriff mit dem Fixierungssystem 11 gebracht. Dabei ist das Dachelement 13 gegenüber der Rollbügelvorrichtung 7 etwas d.h. mit dem Maß Da angehoben - Fig. 2 -. Nach definiertem Absenken des Dachelements 13 nimmt es seine Konstruktionslage ein, und die Verriegelungseinrichtung 15 - Fig.3 - ist wirksam; die Demontage des Dachelements 13 folgt in umgekehrter Reihenfolge, wobei für das Aufsetzen bzw. Lösen des anderen Dachelements 14 vergleichbare Montageschritte erforderlich sind.

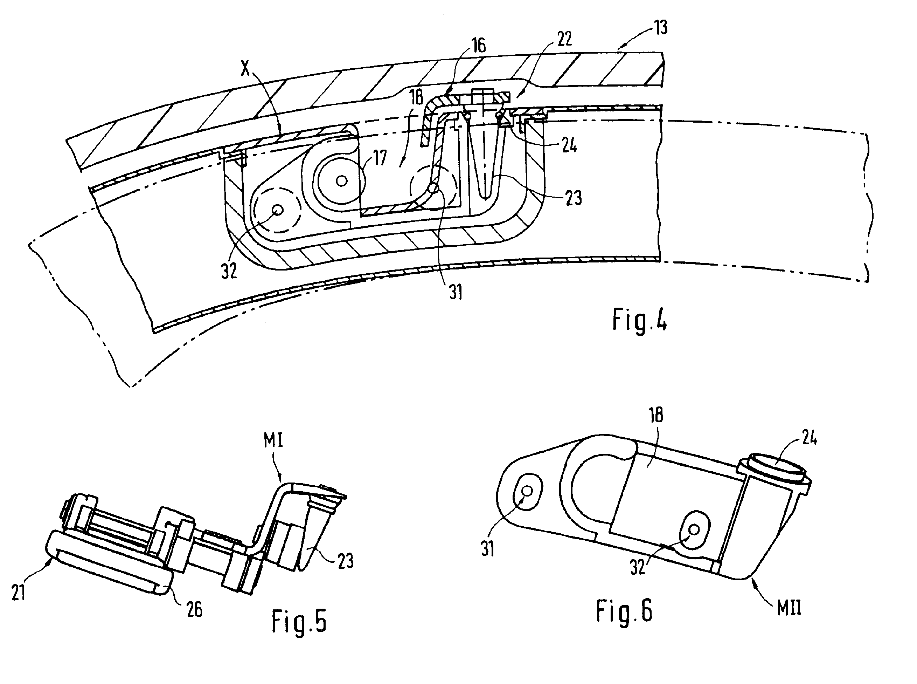

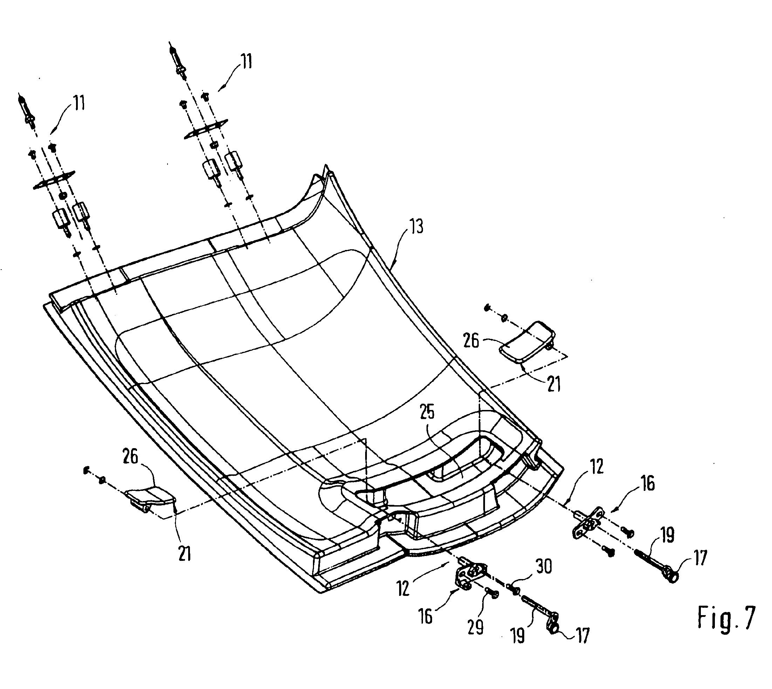

Aus Fig. 3 geht hervor, dass die Verriegelungseinrichtung 15 des Verriegelungssystems 12 eine Betätigungsvorrichtung 16 mit einem Sperrzapfen 17 aufweist, der mit einer Schließkulisse 18 zusammenarbeitet, dergestalt, dass das Dachelement 13 - in Fahrzeughöhenrichtung F-F gesehen - gegen die Rollbügelvorrichtung 8 gespannt wird. Die Betätigungseinrichtung 16 ist am Dachelement 13 angebracht; die Schließkulisse 18 an der Rollbügelvorrichtung 8. Der Sperrzapfen 17 ist Teil eines mit einer in Fahrzeuglängsrichtung C-C ausgerichteten Schwenkwelle 19 verbundenen Kurbelarms 20, an dem ein Handhebel 21 angreift. Damit das Dachelement 13 bei der Montage lagerichtig zur Rollbügelvorrichtung 8 ausgerichtet ist, ist zwischen Betätigungsvorrichtung 16 und Schließkulisse 18 eine Fixierungsvorrichtung 22 - Fig. 4 - wirksam, die einen aufrechten bspw. konischen Zapfen 23 und eine mit letzterem in Wirkverbindung stehenden korrespondierenden Aufnahmeöffnung 24 aufweist. Im abgebildeten Ausführungsbeispiel sind der Zapfen 23 an der Betätigungsvorrichtung 16 und die Aufnahmeöffnung 24 an der Schließkulisse 18 angebracht. Der Handhebel 21 der Verriegelungseinrichtung 15 ist in einer Ausnehmung 25 des Dachelements 13 untergebracht. Dabei umfasst der Handhebel 21 eine Bedienplatte 26, die oberflächenbündig zu die Ausnehmung 25 begrenzenden Innenwänden 27 und 28 des Dachelements 13 angeordnet ist. Um einen einfachen Aufbau der Verriegelungseinrichtung 15 zu erzielen, sind der Handhebel 21, die Schwenkwelle 19 und der Zapfen 23 als vorgefertigtes Modul l, Ml, baulich vereinigt - Fig.5 - und unter Vermittlung von Schrauben 29,30 am Dachelement 13 befestigt. Die bauliche Vereinigung von Modul ll, Mll, gilt sinngemäß für die Aufnahmeöffnung 24 und die Schließkulisse 18 - Fig.6 -, die jedoch mit Schrauben 31,32 an der Rollbügelvorrichtung 8 gehalten sind. Pro Dachelement 13 oder 14 können zwei mit Abstand zueinander angeordnete Betätigungsvorrichtungen 16 vorgesehen sein - Fig.7 -, die mit den zugehörigen Schließkulissen 18 in Eingriff stehen.

Die Fig.3 zeigt wie das Dachelement 13 mit einer hinteren Dachwandverlängerung 33 eine Rinne 34 der Rollbügelvorrichtung 8 überragt und unter Vermittlung eines ersten Dichtabschnitts 35 und eines zweiten Dichtabschnitts 36 an die Rinne 24 bzw. die Rollbügelvorrichtung 8 herangeführt ist. Dabei ist der erste Dichtabschnitt 35 zwischen einem freien Ende 37 der Dachverlängerung 33 und einer aufrechten Wand 38 der Rollbügelvorrichtung 8 vorgesehen. Der zweite Dichtabschnitt 36 hingegen ist zwischen einer Innenwand 38 der Dachverlängerung 33 und einer in Richtung der zuletzt genannten ausgerichteten Wand 39 der Rinne 34 wirksam.

## Patentansprüche

1. Abnehmbares Dach für ein Kraftfahrzeug, insbesondere für einen Personenkraftwagen, das eine Öffnung zwischen einem Windschutzscheibenrahmen und einer bspw. hinter Fahrgastsitzen sich erstreckenden Aufbaurahmenstruktur eines Aufbaus des Personenkraftwagens abdeckt und einerseits mittels eines formschlüssig wirkenden Fixierungssystems und andererseits mittels eines Verriegelungssystems in Lage gehalten ist, welches Verriegelungssystem zwischen Dach und der als Rollbügelvorrichtung ausgebildeten Aufbaurahmenstruktur wirksam ist, **dadurch gekennzeichnet, dass** das Verriegelungssystem (12) des Dachs (9) wenigstens eine mit der Rollbügelvorrichtung (8) zusammenarbeitende Verriegelungsvorrichtung (15) aufweist, bestehend aus einer Betätigungsvorrichtung (16) mit einem Sperrzapfen (17), der in eine Schließkulisse (18) eingreift.

2. Abnehmbares Dach nach Anspruch 1, **dadurch gekennzeichnet, dass** die Betätigungsvorrichtung (8) am Dach (9) und die Schließkulisse (18) an der Rollbügelvorrichtung (8) befestigt sind.

3. Abnehmbares Dach nach Anspruch 1, **dadurch gekennzeichnet, dass** der Sperrzapfen (17) an einem mit einer Schwenkwelle (19) verbundenen Kurbelarm (20) angebracht ist, welche Schwenkwelle (19) mit einem Handhebel (21) verbunden ist.

4. Abnehmbares Dach nach Anspruch 1, **dadurch gekennzeichnet, dass** zwischen Betätigungsvorrichtung (16) und Schließkulisse (18) eine Fixierungsvorrichtung (22) wirksam ist.

5. Abnehmbares Dach nach Anspruch 4, **dadurch gekennzeichnet, dass** die Fixierungsvorrichtung (22) einen aufrechten bspw. konischen Sperrzapfen (17) aufweist, der mit einer Aufnahmeöffnung (24) zusammenarbeitet.

6. Abnehmbares Dach nach Anspruch 4, **dadurch gekennzeichnet, dass** der Sperrzapfen (17) an der Betätigungsvorrichtung (16) und die Aufnahmeöffnung (24) an der Schließkulisse (18) angebracht sind.

7. Abnehmbares Dach nach den Ansprüchen 1 und 2, **dadurch gekennzeichnet, dass** der Handhebel (21) in einer Ausnehmung (25) des Dachelements (13 oder 14) untergebracht ist.

8. Abnehmbares Dach nach Anspruch 7, **dadurch gekennzeichnet, dass** der Handhebel (21) eine Bedienplatte (26) umfasst, die bspw. oberflächenbündig zu Innenwänden (27,28) des Dachelements (13 oder 14) ausgerichtet ist.

9. Abnehmbares Dach nach einem oder mehreren der vorangehenden Ansprüche, **dadurch gekennzeichnet, dass** der Handhebel (21), die Schwenkwelle (18) und der Sperrzapfen (17) baulich vereinigt und unter Vermittlung von Schrauben (29,30) am Dachelement (13 oder 14) befestigt sind.

10. Abnehmbares Dach nach einem oder mehreren der vorangehenden Ansprüche, **dadurch gekennzeichnet, dass** Aufnahmeöffnung (24) und die Schließkulisse (18) baulich vereinigt und unter Vermittlung von Schrauben (31,32) an der Rollbügelvorrichtung (8) befestigt sind.

11. Abnehmbares Dach mit zwei in einer Mittellängsebene des Personenkraftwagens zusammengesetzten Dachelemente nach einem oder mehreren der vorangehenden Ansprüche **dadurch gekennzeichnet, dass** je Dachelement (13 oder 14) zwei Betätigungsvorrichtungen (16,16') vorgesehen sind, die mit korrespondierenden Schließkulissen (56) an der Rollbügelvorrichtung (8) zusammenarbeiten.

12. Abnehmbares Dach nach Anspruch 1, **dadurch gekennzeichnet**, das jedes Dachelement (13 oder 14)mit einer hinteren Dachwandverlängerung (33) eine Rinne (34) der Rollbügelvorrichtung (8) überragt und unter Vermittlung eines ersten Dichtabschnitts (35) und eines zweiten Dichtabschnitts (36) an die Rinne (34) bzw. die Rollbügelvorrichtung (8) herangeführt ist.

13. Abnehmbares Dach nach Anspruch 12, **dadurch gekennzeichnet, dass** der erste Dichtabschnitt (35) zwischen einem freien Ende (37) der Dachwandverlängerung (33) und einer aufrechten Wand (38) der Rollbügelvorrichtung (8) vorgesehen ist.

14. Abnehmbares Dach nach Anspruch 12, **dadurch gekennzeichnet, dass** der zweite Dichtabschnitt (14) zwischen einer Innenwand (38) der Dachwandverlängerung (33) und einer horizontalen Wand (39) der Rinne (34) wirksam ist.
